# EUROPEAN PATENT APPLICATION

(11) **EP 1 932 685 A1**
(43) Date of publication of application: **18.06.2008**
(21) Application number: 06798508.5
(22) Date of filing: 03.10.2006
(51) Int. Cl.: B60C 5/14, B32B 25/04, C08J 5/12

(54) **THERMOPLASTIC ELASTOMER COMPOSITION/PRESSURE-SENSITIVE ADHESIVE/DIENE RUBBER COMPOSITION LAMINATE AND PNEUMATIC TIRES MADE BY USING THE SAME**

(30) Priority: 06.10.2005 JP 2005293495
(71) Applicant: THE YOKOHAMA RUBBER CO., LTD., Tokyo 105-8685 (JP)
(72) Inventor: KANENARI, Daisuke, Hiratsuka-shi, Kanagawa 254-8601 (JP)
(74) Representative: HOFFMANN EITLE
(86) International application number: PCT/JP2006/320158
(87) International publication number: WO 2007/043497

(57) **Abstract**

A laminate comprising a thermoplastic elastomer composition (A) having a thermoplastic resin as a continuous phase and a composition containing an elastomer component as a dispersed phase and a diene-based rubber composition (C), adhered with a tackifier adhesive (B), where a difference of 50% modulus at room temperature is (A)>(C)>(B) and a difference of storage elastic modulus E' at 0°C is (A)≥(B)≥(C), whereby the high temperature dynamic adhesiveness of the tackifier adhesive of the laminate comprising the thermoplastic elastomer composition layer/the tackifier adhesive layer/the diene-based rubber composition layer and the low temperature durability of the thermoplastic elastomer composition layer are improved.

## Description

### TECHNICAL FIELD

The present invention relates to a laminate and a pneumatic tire using the same, more particularly relates to a laminate of a specific thermoplastic elastomer composition/tackifier adhesive/diene-based rubber and a pneumatic tire using the same as an inner liner, carcass layer and/or tie rubber layer.

### BACKGROUND ART

The technique of utilizing a film of a thermoplastic resin and thermoplastic elastomer composition as an inner liner (or an air permeation preventive layer) of a pneumatic tire is known (e.g., see Japanese Patent Publication (A) No. 10-25375). This film is not sufficient in adhesiveness with a carcass layer and a tie rubber layer (i.e., a cushioning material between a carcass layer and an inner liner), and, therefore, it has been proposed to coat a tackifier adhesive or to coextrude the same with a film to secure adhesiveness (e.g., see Japanese Patent No. 3320420 and Japanese Patent Publication (A) No. 11-240108).

### DISCLOSURE OF THE INVENTION

As means for solving the problem of securing adhesiveness, research is under way on laminates of a thermoplastic elastomer layer/tackifier adhesive layer/diene-based rubber composition layer. Under these circumstances, of the present invention, the object is to provide a laminate of a thermoplastic elastomer layer/tackifier adhesive layer/diene-based rubber composition layer having the improved high temperature dynamic adhesiveness of the tackifier adhesive to form the tackifier adhesive layer and having the improved low temperature durability of the thermoplastic elastomer layer and a pneumatic tire using the same as an inner liner, etc., thereof.

### MEANS FOR SOLVING THE PROBLEMS

In accordance with the present invention, there is provided a laminate comprising a thermoplastic elastomer composition (A) containing a thermoplastic resin as a continuous phase and an elastomer-containing composition component, as a dispersed phase, and a diene-based rubber composition (C), adhered with a tackifier adhesive (B), where a difference of 50% modulus at room temperature is (A)>(C)>(B) and a difference of storage modulus (of elasticity) E' at 0°C is (A)≥(B)≥(C) and a pneumatic tire using the same.

### EFFECTS OF THE INVENTION

According to the present invention, by suppressing the modulus value of the tackifier adhesive (B) at room temperature or more low, it is possible to decrease the stress acting on the adhered interface and possible to increase the high temperature dynamic adhesiveness between the thermoplastic elastomer composition (A) and the tackifier adhesive (B). Further, by reducing in stages the storage elastic modulus E' (0°C) of the thermoplastic elastomer composition (A)/tackifier adhesive (B)/diene-based rubber composition (C), it is possible to prevent stress concentration and improve the durability of the thermoplastic elastomer composition layer (i.e., low temperature durability).

### BEST MODE FOR CARRYING OUT THE INVENTION

The singular forms ("a", "an", "the") used in the Description and Claims of this application should be understood as including the plural forms, except when otherwise self evident from the context.

The inventors found that, in a laminate of a thermoplastic elastomer composition (A)/tackifier adhesive (B)/diene-based rubber composition (C), by making a difference at room temperature 50% modulus determined according to JIS K6251 at 23°C, (A) > (C) > (B) and by making a difference in storage elastic modulus E', determined using Toyo Seiki Seisakusho viscoelastic spectrometer at frequency of 20Hz and strain of 10±2% at 0°C, (A)≥(B)≥(C), it is possible to improve the high temperature dynamic adhesiveness of the tackifier adhesive (B) and to improve the low temperature durability of the thermoplastic elastomer composition (A).

The laminate according to the present invention is a laminate comprising a layer of a thermoplastic elastomer composition (A) comprised of a matrix of a thermoplastic resin in which a composition including an elastomer component is dispersed and a layer of a diene-based rubber composition (C) laminated via a layer of a tackifier adhesive (B). The thermoplastic elastomer composition (A) has, for example, an air barrier coefficient of preferably 25×10⁻¹² cc·cm/cm²·sec·cmHg or less, more preferably 0.1 to 20×10⁻¹² cc·cm/cm²·sec·cmHg, and a Young's modulus of preferably 1 to 500 MPa, more preferably 1 to 400 MPa. The thermoplastic elastomer (A) may be obtained by extruding of a thermoplastic elastomer comprised of a matrix (i.e., a continuous phase) of at least one thermoplastic resin such as, for example, a polyamide-based resin, polyester-based resin, polynitrile-based resin, polymethacrylate-based resin, polyvinyl-based resin, cellulose-based resin, fluorine-based resin, or imide-based resin, in which an at least partially vulcanized rubber of at least one elastomer such as a diene-based rubber and the hydrogenates thereof an olefin-based rubber, halogen-containing rubber, silicone rubber, sulfur-containing rubber, fluorine rubber and thermoplastic elastomer is dispersed. Specifically, the thermoplastic resin and the unvulcanized rubber are, in advance, melt kneaded by a twin-screw kneading extruder, etc., whereby the elastomer component is dispersed in the thermoplastic resin forming a continuous phase, to obtain the derived thermoplastic elastomer. When the elastomer component is vulcanized, the vulcanizing agent is either added, while kneading, or the vulcanizing agent is, in advance, added compounded to the rubber component and used to dynamically vulcanize the elastomer component. Further, the various types of agents compounded into the thrmoplastic resin and/or the elastomer component (except for the vulcanization agent) may be added during the above kneading, but preferably are mixed therein, in advance, before the kneading. The kneading (or mixing) machine used for kneading the thermoplastic resin and the elastomer component is not particularly limited. A screw extruder, kneader, Banbury mixer, twin-screw kneading extruder, etc. may be mentioned. Among these, use of a twin-screw kneading extruder is preferable. Note that the method for producing a film of the thermoplastic elastomer composition etc. are described in further detail in, for example, Japanese Patent Publication (A) No. 8-258506 and other documents. In the present invention, the methods described in these documents may be also used.

As the matrix resin of the thermoplastic elastomer composition (A) according to the present invention, for example, polyamide-based resins (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6 (MXD6), Nylon 6T, Nylon 6/6T copolymer, Nylon 66/PP copolymer, Nylon 66/PPS copolymer) and the N-alkoxylates thereof, for example, a methoxymethylate of 6-Nylon, a methoxymethylate of 6-610-Nylon, a methoxymethylate of 612-Nylon, polyester-based resins (e.g., polybutylene terephthalate (PBT), polyethylene terephthalate (PET), polyethylene isophthalate (PEIO), PET/PEI copolymer, polyacrylate (PAR), polybutylene naphthalate (PBN), liquid crystal polyester, polyoxyalkylene diimidic acid/polybutyrate terephthalate copolymer or aromatic polyester), polynitrile-based resins (e.g., polyacrylonitrile (PAN), polymethychloronitrile, acrylonitrile/styrene copolymer (AS), methacrylonitrile/styrene copolymer, methacrylonitrile/styrene/butadiene copolymer), a polymethacrylate-based resin (e.g., polymethyl methacrylate (PMMA), polyethyl methacrylate), polyvinyl-based resins (e.g., vinyl acetate, polyvinyl alcohol (PVA), vinyl alcohol/ethylene copolymer (EVOH), polyvinylidene chloride (PDVC), polyvinyl chloride (PVC), vinyl chloride/vinylidene chloride copolymers, vinylidene chloride/methyl acrylate copolymers, vinylidene chloride/acrylonitrile copolymers), cellulose-based resins (e.g., cellulose acetate and cellulose acetobutyrate), fluorine-based resins (e.g., polyvinylidene fluoride (PVDF), polyvinyl fluoride (PVF), polychlorofluoroethylene (PCTFE), tetrafluoroethylene/ethylene copolymer), an imide-based resin (for example aromatic polyamide (PI)) etc. may be mentioned. These may be used alone or in any blend's thereof.

On the other hand, as the elastomer component in the composition containing an elastomer component present, as a dispersed phase, in the thermoplastic elastomer composition (A) of the present invention, for example, diene-based rubbers and the hydrogenates thereof (e.g., NR, IR, epoxylated natural rubber, SBR, BR (high cis BR and low cis BR) and their maleate-adducts, NBR, hydrogenated NBR, hydrogenated SBR), olefin-based rubbers (e.g., ethylene propylene rubber (EPDM and EPM), maleate-modified ethylene propylene rubber (M-EPM), IIR, isobutylene and aromatic vinyl or diene-based monomer copolymers, acryl rubber (ACM), ionomers), halogen-based rubbers (e.g., brominated butyl rubber (Br-IIR), chlorinated butyl rubber (Cl-IIR), brominated isobutylene paramethyl styrene copolymer (Br-IPMS), chloroprene rubber (CR), hydrin rubber (CO, ECO, GCO, and GECO), chlorosulfonated polyethylene (CSM), chlorinated polyethylene (CM), maleic acid-modified chlorinated polyethylene (M-CM)), silicone rubber (e.g., methylvinyl silicone rubber, dimethyl silicone rubber, methylphenyl vinyl silicone rubber), sulfur-containing rubbers (e.g., polysulfide rubber), fluorine rubber (e.g., vinylidene fluoride-based rubber, fluorine-containing vinyl ether-based rubber, tetrafluoroethylene-propylene-based rubber, fluorine-containing silicone-based rubber, fluorine-containing phosphagen-based rubber), thermoplastic elastomers (e.g., styrene-based elastomer, polyolefin-based elastomer, polyester-based elastomer, polyurethane-based elastomer, and polyamide-based elastomer) etc. may be mentioned. These may be used alone or in any blends thereof.

The diene-based rubber composition (C) forming the laminate according to the present invention is a composition containing a diene-based rubber. This composition (C) can, for example, be made into a sheet and laminated with the layer (film) of the composition (A) via the tackifier adhesive (B) to obtain a laminate. The laminate can be directly used for a carcass layer or a tie rubber layer of a pneumatic tire in a conventional tire manufacture process.

As the diene-based rubber usable in the diene-based rubber composition (C) of the present invention, it is possible, for example, to use any diene-based rubber usable for a tire, etc. Specifically, various types of natural rubber (NR), various types of polybutadiene rubber (BR), various types of polyisoprene rubber (IR), various types of styrene-butadiene copolymer rubber (SBR), acrylonitrile-butadiene copolymer rubber (NBR), styrene-isoprene copolymer rubber, styrene-isoprene-butadiene copolymer rubber or diene-based rubber or butyl rubber, halogenated butyl rubber, ethylene-propylene-diene copolymer rubber, etc. may be mentioned. These may be used alone or in any blends thereof.

The tackifier adhesive usable for a laminate according to the present invention is not particularly limited so long as the values of 50% modulus value at a room temperature and the dynamic modulus (of elasticity) (or storage modulus) E' (0°C) satisfy the above requirements, that is, the former satisfies (A)>(C)>(B) and the latter satisfies (A)≥(B)≥(C). Those conventionally used may be used. Specifically, for example, it may be obtained by compounding a tackifier to any polymer generally used as a tackifier adhesive polymer of a rubber layer in the past, for example, SBS (styrene-butadiene-styrene block copolymer), SIS (styrene-isoprene-styrene block copolymer), SEBS (styrene-ethylene-butadiene-styrene block copolymer), SIBS (styrene-isoprene-butadiene-styrene block copolymer), EVA (ethylene-vinyl acetate copolymer), EEA (ethylene-ethyl acrylate copolymer), EMA (ethylene-methyl acrylate copolymer), or other polymer. The tackifier usable in the present invention is not particularly limited. A general tackifier may be used. As specific examples, terpene resins, modified terpene resins, pinene resins, terpene phenol resins, rosin-based resins, C5-based petroleum resins, C9-based petroleum resins, DCPD-based petroleum resins, styrene-based resins, coumarone resins, alkyl phenol resins, etc. may be mentioned. The compounding amount thereof is also not limited, but is preferably 10 to 200 parts by weight, more preferably 30 to 100 parts by weight, based upon 100 parts by weight of the tackifier adhesive polymer component.

The rubber composition according to the present invention may contain, in addition to the above essential components, various additives generally compounded as the general rubber use such as carbon black, silica, or another filler, a vulcanization or cross-linking agent, a vulcanization or cross-linking accelerator, various types of oils, an antiaging agent, a plasticizer. The additives may be kneaded by a general method to obtain a composition, which may then be used for vulcanization or cross-linking. The compounding amounts of these additives may be the conventional general amounts so long as the object of the present invention is not adversely affected.

### EXAMPLES

Examples will now be used to further explain the present invention, but the scope of the present invention is by no means limited to these Examples.

### Examples 1 to 2 and Comparative Examples 1 to 3

### Formulations A and B of Thermoplastic Elastomer Composition Layer (Air Permeation Preventive Layer)

In each formulation shown in Table I, the compounding agents were charged into a twin-screw type kneading extruder, where they were kneaded at a set temperature of 200°C and extruded into strands having a diameter of about 3 mm, which were then cut by a strand cutter into pellet shapes. These pellets were formed into sheets having a thickness of 0.2 mm by a T-die having a width of 400 mm.

**Table I**

| | Formulation A | Formulation B |
|---|---|---|
| Formulation (parts by weight) | | |
| Br-IPMS(EXXPRO 89-4, Exxon Mobil Chemical) | 100 | 100 |
| PA 6/66(Ube Nylon 5033B, Ube Industries) | 30 | 50 |
| PA 11(Rilsan BESN O TL, Atofina Japan) | 40 | 20 |
| Zinc oxide (Zinc White #3, Seido Chemical) | 0.2 | 0.2 |
| Stearic acid (Beads Stearic Acid, Kao) | 0.5 | 0.5 |
| Zinc stearate (Zinc Stearate, Seido Chemical) | 0.3 | 0.3 |
| Plasticizer (BM-4, Daihachi Chemical Industry) | 10 | 10 |
| Antioxidant (Irganox 1098, Ciba-Specialty Chemicals) | 0.5 | 0.5 |

| Physical properties of material | | |
|---|---|---|
| Tensile test: 50% modulus (MPa) | 8.5 | 11.6 |
| Dynamic modulus (or storage modulus) E' (0°C) (MPa) | 175 | 380 |

### Formulations C and D of Tackifier Adhesive Layer

In each of the formulations shown in Table II, the compounding agents were charged into a single-screw type kneading extruder, where they were kneaded at a set temperature of 110°C and extruded into strands having a diameter of about 3 mm. The strands were cut by a strand cutter to process them into pellet forms. These were formed into a sheet having a thickness of 0.03 mm by a T-die having a width of 400 mm.

**Table II**

| | Formulation C | Formulation D |
|---|---|---|
| Formulation (parts by weight) | | |
| Epoxylated SBS(Epoblend A1020, Daicel Chemical Industries) | 60 | 60 |
| SBS(Tufprene A, Asahi Kasei) | 40 | 40 |
| Aromatically modified terpene resin (YS Resin TR-105, Yasuhara Chemical) | 70 | 50 |
| Carbon black (HTC #100, Nippon Steel Chemical Carbon) | - | 10 |
| Zinc oxide (Zinc White #3, Seido Chemical) | 5 | 5 |
| Stearic acid (Beads Stearic Acid, Kao) | 1 | 1 |
| Organic peroxide (Parkerdox 14, Akzo Nobel) | 0.5 | 0.5 |

| Physical properties of material | | |
|---|---|---|
| Tensile test: 50% modulus (MPa) | 1.1 | 2.4 |
| Dynamic modulus (or storage modulus) E'(0°C)(MPa) | 151 | 186 |

### Formulations E and F of Carcass Rubber Layer

In each of the formulations shown in Table III, the compounding agents, except for the vulcanizing agent, were charged into a 1.7 liter Banbury mixer, where they were kneaded at a set temperature of 70°C for 5 minutes to obtain a master batch. Next, an 8-inch roll was used to knead the same with the vulcanization agent to obtain unvulcanized rubber having a thickness of 2 mm.

**Table III**

| | Formulation E | Formulation F |
|---|---|---|
| Formulation (parts by weight) | | |
| Natural rubber (RSS#3) | 50 | 50 |
| Polybutadiene rubber (Nipol BR-1220, Nippon Zeon) | 20 | 20 |
| Styrene-butadiene rubber (Nipol 1502, Nippon Zeon) | 30 | 30 |
| Carbon black (Diablack E, Chubu Carbon) | 60 | 40 |
| Zinc white (Zinc White #3, Seido Chemical) | 5 | 5 |
| Stearic acid (Beads Stearic Acid, Kao) | 1 | 1 |
| Aromatic oil (Extract No. 4S, Showa Shell Oil) | 10 | 15 |
| Antioxidant (Nocrac 224, Ouchi Shinko Chemical) | 1 | 1 |
| Sulfur (Crystex HSOT20, Flexsys) | 3 | 3 |
| Vulcanization accelerator (Noccelar NS-F, Ouchi Shinko Chemical) | 1.5 | 1.5 |

| Physical properties of material | | |
|---|---|---|
| Tensile test: 50% modulus (MPa) | 1.3 | 0.9 |
| Storage modulus (or Dynamic modulus) E'(0°C) (MPa) | 10.2 | 6.5 |

### Preparation of Laminate Sample

In each of the combinations of Table IV, sheets cut to 15 cm × 15 cm were laminated in the order and vulcanized at 170°C for 10 minutes to obtain a laminate.

**Table IV**

| | Comp. Ex. 1 | Comp. Ex. 2 | Comp. Ex. 3 | Ex. 1 | Ex. 2 |
|---|---|---|---|---|---|
| Combination of formulations | | | | | |
| Formulation of air Permeation Preventive layer | Formulation A | Formulation B | Formulation A | Formulation B | Formulation A |
| Formulation of adhesive layer | Formulation D | Formulation D | Formulation C | Formulation C | Formulation C |
| Formulation of carcass rubber layer | Formulation E | Formulation E | Formulation F | Formulation E | Formulation E |
| Order of 50% modulus value (matching with provisions of present invention) | A>D>E (No) | B>D>E (No) | A>C>F (No) | B>E>C (Yes) | A>E>C (Yes) |
| Order of value of E' (0°C) (matching with provisions of present invention) | D>A>E (No) | B>D>E (Yes) | A>C>F (Yes) | B>C>E (Yes) | A>C>E (Yes) |

| cut constant strain fatigue test | | | | | |
|---|---|---|---|---|---|
| Fatigue test after cut (60°C) | - | - | - | + | + |
| Fatigue test after cut (- 20°C) | - | + | ± | + | + |

### Test Methods for Evaluation of Performance

Tensile test (50% modulus): Value determined according to JIS-K6251 for each material shaped to thickness of 2 mm.

Storage modulus (of elasticity) E': 0°C storage modulus determined using Toyo Seiki Seisakusho viscoelastic spectrometer under conditions of static strain of 10%, dynamic strain of ±2% and frequency of 20 Hz.

Cut constant strain fatigue test: A 0.2 mm sheet of each of the formulations of the air permeation preventive layer shown in Table I, a 0.03 mm sheet of each of the adhesive formulations shown in Table II and a 2 mm sheet of each of the carcass rubbers shown in Table III were successively laminated and vulcanized by a 15 cm × 15 cm × 0.2 cm mold at 170°C for 10 minutes to obtain a laminate. From each laminate sample, five JIS No. 2 dumbbell shapes were punched and were given vertical cuts of 5 mm width at their centers. Each sample was given repeated strain 500,000 times with a chuck distance of 60 mm and a stroke of 20 mm. Subsequent peeling was visually examined. The states with the highest frequencies among n=5 by the following judgment criteria are shown in Table IV.
+: No progression of peeling from crack, breakage of rubber material
±: Progression of peeling from crack of not more than 5 mm observed, but no interfacial peeling
-: Progression of peeling from crack of 5 mm or more, with adhesive interfacially peeling

### INDUSTRIAL APPLICABILITY

According to the present invention, it is possible to obtain a laminate comprising a thermoplastic elastomer composition/a tackifier adhesive/a diene-based rubber composition having improved high temperature dynamic adhesiveness of the tackifier adhesive and low temperature durability of the thermoplastic elastomer layer, and therefore, this is useful as an air permeation preventive layer of a pneumatic tire, in particular an air barrier layer of an all season tire or studless tire to be used under low temperatures.

## Claims

1. A laminate comprising a thermoplastic elastomer composition (A) containing a thermoplastic resin, as a continuous phase, and an elastomer-containing composition component, as a dispersed phase, and a diene-based rubber composition (C), adhered with a tackifier adhesive (B), where a difference of 50% modulus at room temperature is (A)>(C)>(B) and a difference of storage modulus (of elasticity) E' at 0°C is (A)≥(B)≥(C).

2. A laminate as claimed in claim 1, wherein the thermoplastic resin is at least one resin selected from the group consisting of polyamide resins, polyester resins, polynitrile resins, polymethacrylate-based resins, polyvinyl-based resins, cellulose-based resins, fluorine-based resins, and imide-based resins.

3. A laminate as claimed in claim 1 or 2, wherein the elastomer component is at least one elastomer selected from the group consisting of diene-based rubbers and the hydrogenates thereof, olefin-based rubbers, halogen-containing rubbers, silicone rubbers, sulfur-containing rubbers, fluorine rubbers and thermoplastic elastomers.

4. A pneumatic tire using a laminate according to any one of claims 1 to 3, as an air permeation preventive layer and a tie rubber layer and/or carcass layer.
